# EUROPEAN PATENT APPLICATION

(11) **EP 1 516 536 A1**
(43) Date of publication of application: **23.03.2005**
(21) Application number: 03447232.4
(22) Date of filing: 22.09.2003
(51) Int. Cl.: A21D 8/04

(54) **Bakery products comprising carbohydrate oxidase**

(71) Applicant: Puratos Naamloze Vennootschap, 1702 Groot-Bijgaarden (BE)
(72) Inventor: Arnaut, Filip, 1761 Roosdaal (BE); De Meyer, Karel, 92370 Laarne (BE); Van Haesendonck, Ingrid, 2800 Mechelen (BE)
(74) Representative: Van Malderen, Joelle

(57) **Abstract**

The present invention is related to a method for the improvement of shape and width of cuts of bread during the baking process of bakery products which comprises the step of adding a sufficiently effective amount of Carbohydrate oxidase or Pyranose oxidase in said bakery products.

## Description

### Field of the invention

The present invention is related to improvement of the shape of bread by addition of functional ingredient such as enzymes.

### State of the art

Bread-improving and/or dough improving additives are in the bread making process added to the dough in order to improve texture, volume, flavour and freshness of the bread as well as to improve mach inability and stability of the dough. Dough conditioners: Data - esters, oxidants like Ascorbic acid, KBrO₃, ADA and enzymes like lipase added to strengthen the gluten and improve rheological and handling properties of the dough, improve the shape of the bread significantly. Dough pieces of baguette type breads and schnittbrötchen are cut respectively after proofing, right before baking, and before proofing in order to improve the shape of the final product due to increased opening of the cuts as a result of the improved oven spring.

As the use of chemical oxidants like ADA or bromate is forbidden in most countries research is performed in order to replace the chemical oxidants by natural ones like enzymes.

### Use of Glucose oxidase, Carbohydrate oxidase and Pyranose oxidase in baking.

The effect of Carbohydrate oxidase and Pyranose oxidase as a dough improving and bread improving agent are disclosed in respectively WO 99/31990 and WO 97/22257.

EP 321 811 and EP 338 452 disclose the use of Glucose oxidase, in combination with other enzymes.

The inventors of WO99/31990 found a novel Carbohydrate oxidase which can oxidize the reducing end of an oligosaccharide more efficiently than the corresponding monosaccharide, e.g., preferentially oxidizing maltodextrines or cellodextrines over glucose. This document describes the effect of carbohydrate oxidase on firmness, stickiness, stability and robustness of the dough. Also the increased tolerance of the dough towards increased mixing time, fermentation time and water content is described. The use of the Carbohydrate oxidase may result in an increased volume and improved crumb structure and softness of the baked product, as well as an increased strength, stability and reduced stickiness of the dough.

### Aims of the invention

The present invention aims to provide a novel method for improving the shape and width of cuts of bread.

### Summary of the invention

The present invention concerns a method for the improvement of shape and width of cuts of bread during the baking process of bakery products which comprises the step of adding a sufficiently effective amount of Carbohydrate oxidase and/or Pyranose oxidase in said bakery products.

Preferably, the method according to the invention further comprises the step of adding other conventionally used baking additives or combinations of baking additives selected from the group consisting of gluten, oxidantia like vitamin C and Azodicarbonamide, emulsifiers like mono-or diglycerides, diacetyl tartaric acid of monoglycerides, sodium stearoyl lactylates, sugar esters of fatty acids, lecithin, sugar, salt, fat and/or oil.

Preferably, the method according to the invention is further characterised in that the Carbohydrate oxidase and/or Pyranose oxidase is added to the ingredients as a dry powder, a granulated or agglomerated powder or a liquid improver.

Preferably, the method according to the invention is further characterised in that the sufficiently effective amount of the carbohydrate oxidase and/or pyranose oxidase lies between 5 and 500 u/kg flour.

Preferably, the method according to the invention is further characterised in that the width of cuts of the baked product is significantly larger than compared with a reference bread not comprising a sufficiently effective amount of Carbohydrate oxidase and/or Pyranose oxidase.

Advangateously, the method according to the invention is further characterised in that the width of cuts of the baked product is between about 10% and about 400% larger than compared with a reference bread not comprising a sufficiently effective amount of Carbohydrate oxidase and/or Pyranose oxidase.

Another aspect of the present invention concerns the use of Carbohydrate oxidase and/or Pyranose oxidase in the improvement of the shape and the width of cuts of bread during the baking process of bakery products.

### Short description of the drawings

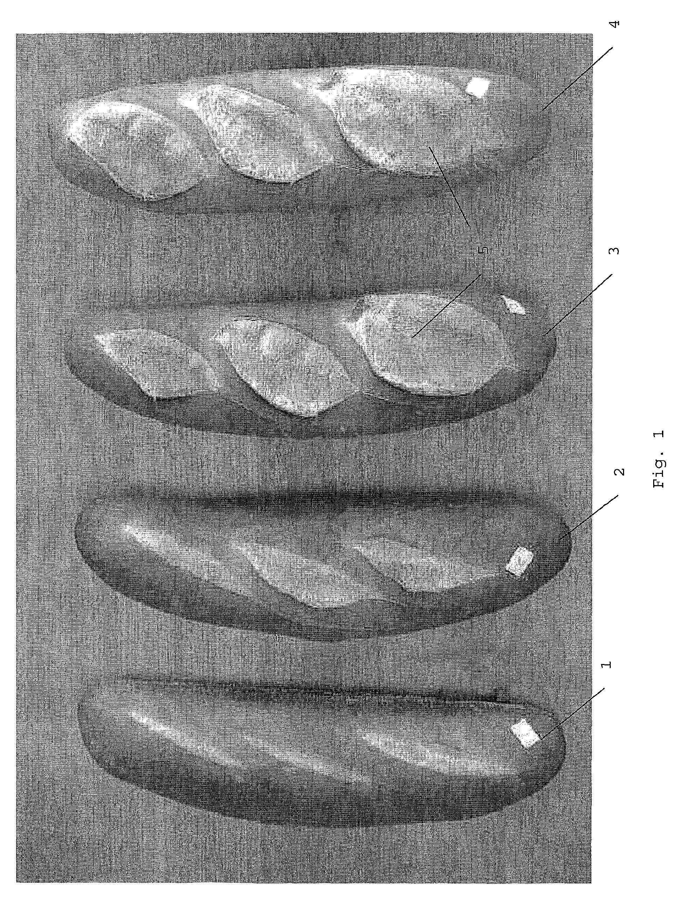

Fig. 1 represents the results of the baking test from example 1.

### Detailed description of the invention

### Properties of the Carbohydrate oxidase:

The oligosaccharide oxidase may be obtained from a strain of Microdochium or Acremonium, preferably a strain of *M. nivale,* more preferably CBS 100236. WO 99/31990 describes the isolation of the gene encoding the Carbohydrate oxidase from *M. nivale* CBS 100236 and insertion into *E.coli.* and a method for producing a carbohydrate oxidase comprising cultivating the host cell under conditions conductive to expression of the carbohydrate oxidase and recovering the carbohydrate oxidase.

A preferred carbohydrate oxidase from *M. nivale* is capable of oxidizing oligosaccharides having a degree of polymerization (DP) of DP2-DP5, at a substrate concentration of 0.83mM at a higher rate than the corresponding monosaccharide. Thus the enzyme can hydrolyze both maltodextrins and cellodextrines wherein monosaccharide units are linked by alpha-1, 4 or beta -1, 4 glucosidic bonds, respectively, at a higher rate than glucose. The carbohydrate oxidase can hydrolyze all cellodextrines having DP2-DP5 equally well and at a level around 10-fold higher than the monosaccharide glucose. The carbohydrate is preferably stable at pH 5-7. A preferred Carbohydrate oxidase from *M. nivale* has optimum activity around pH = 6. At 40°C it is stable in the pH range 4-9, but unstable at pH=3.

The carbohydrate oxidase is preferably stable at 20-45°C. A preferred Carbohydrate oxidase from *M. nivale* has optimum activity around 40°C. At pH 6 it is stable up to 60°C, but inactivated at 70°C. It has a denaturation temperature of 73°C.

### Properties of the Pyranose oxidase:

The Pyranose oxidases, described in the WO97/22257, are enzymes which catalyse the oxidation of several monosaccharides at position C2 with the release of hydrogen peroxide. Glucose in its Pyranose form is the preferred substrate. A number of other substrates e.g. furanoses such as xylose can also be oxidized by the enzyme. The Pyranose oxidase is distinct from glucose oxidase (E.C. 1.1.34) which catalyses the oxidation of glucose at position C1 with the concomitant formation of gluconic acid.

When Pyranose oxidase is added to dough intended for use in the preparation of baked products, it may exert an oxidizing effect on dough constituents and thereby serve, e.g. to improve the strength of the gluten structures in the dough and/or baked products and thereby improve the strength of the dough in addition to the rheological and handling properties of the dough. The oxidizing effect is believed to be achieved when the enzyme catalyses the oxidation of monosaccharides present in the flour or dough. WO97/22257 describes an increased volume and improved crumb structure and softness of the baked product, as well as an increased strength, stability and reduced stickiness of the dough, thus resulting in improved mach inability when Pyranose oxidase is added to the dough. The Pyranose oxidase can be from a microbial or fungal origin.

This invention is related to the effect of the use of Carbohydrate oxidase and Pyranose oxidase, added to a bread improving and/or dough improving composition, on the oven spring and the shape of the resulting baked product. An example of a Carbohydrate oxidase is described in patent WO 99/31990 and an example of a Pyranose oxidase is described in the patent WO 97/22257. Addition of Carbohydrate oxidase or Pyranose oxidase to a dough intended for use in preparation of baked products which are cut, an incision is made with a sharp razor blade, just before or at the end (right before baking) of proofing results in an improved oven spring, increased width of cuts and improved shape of the final product. Resulting breads are more round than breads prepared without oxidases or on addition of Glucose oxidase.

The Carbohydrate oxidase or Pyranose oxidase may be added in a composition containing other enzymes like amylase, xylanase, lipase, glucose oxidase, lipoxygenase, peroxidase, and protease. The dough-improving and/or bread improving composition may contain a combination of conventionally used baking additives like: gluten, oxidantia like vitamin C and Azodicarbonamide, emulsifiers like mono-or diglycerides, diacetyl tartaric acid of monoglycerides, sodium stearoyl lactylates, sugar esters of fatty acids, lecithin, sugar and/or salt, fat and/or oil. These mixtures of active ingredients can be diluted by appropriate carriers normally used in bakery applications like wheat flour, rye flour, starch, water or oil, to obtain a dosage level appropriate for mixing in doughs for baking properties. The mixtures can be in powder, granulated, agglomerated or liquid form.

Carbohydrate oxidase or Pyranose oxidase should be dosed between 5000 units and 20000 units for 100 kg of flour.

The effect of addition to the dough of respectively Carbohydrate oxidase and Pyranose oxidase on the volume and the shape of bread are shown in examples 1 to 8.

The specifications of the standard non-treated wheat flour used for the baking trials presented in the following examples are: 12.68% protein, 0.58% ash, falling number = 235 s, Farinograph A = 57.44%, Farinograph B = 90, Farinograph C = 80.

All breads are lengthwise cut (incised) with a sharp razor blade. The width of cut of the resulting breads is measured as the largest distance between the two upstanding edges of the cut after baking.

The standard improver used contains: Fungal alpha amylase (Fungamyl 75.000, Novozymes) 0.9g/100kg flour, xylanase (Belase B210, Beldem) 3g/100 kg flour, vitamin C 10g, Datem (Multec Data HP20, Beldem) 300g/100 kg flour. This is an example of the standard improver. Absolute and relative amounts of additives can vary according to local adaptation to wheat flour and process.

### Example 1: Comparison of the effect of Glucose oxidase, Carbohydrate oxidase and Pyranose oxidase on the shape of overnight fermented breads (17 hours, 20°C).

Dough was prepared with standard non-treated wheat flour (100), water (54), fresh yeast (Gelka, Belgium) (0.35), salt (2) standard improver (1). Dough was mixed in a (Diosna SP24) spiral mixer for 2 minutes at low speed and 7 minutes at high speed. Dough temperature after mixing is 24°C. Dough pieces of 350g are rounded and fermented at 25°C for 20 minutes. After moulding (Bertrand, Electrolux Baking) baguette shaped dough pieces are fermented for 17 hours at 20°C, cut lengthwise with 3 straight cuts of 2 mm depth and 10 cm length who overlap each other 1/3, per bread and baked in a deck oven (210°C, 30 minutes, steaming: 0.2L before baking, very little after baking).

| Dough | Shape of bread | Volume (cc) | Width of cuts (cm) |
|---|---|---|---|
| 1. Reference | | 1350 | 5 |
| 2. GOX 85u/kg flour | slightly more round | 1550 | 11 |
| 3. PO 200u/kg flour | more round | 1825 | 38 |
| | Crust less brown | | |
| 4. CO 200u/kg flour | crust less brown | 1875 | 41 |

When dosed at 200 units/kg flour and fermented at 20°C for 17 hours both Carbohydrate and Pyranose oxidase improve the form of the bread and the width of the cuts significantly when compared to addition of Glucose oxidase.

The result of this are depicted in figure 1. The figure shows the reference bread (1), bread comprising 85u/kg flour GOX (2), bread comprising 200u/kg flour PO (3) and bread comprising 200u/kg flour CO (4). It is clear from the figure that the examples obtained according to the invention (3 and 4) show a remarkable improvement in the overall appearance of the bread due to the volume increase and the increase in the width of the cuts 5.

### Example 2: Comparison of the effect of Glucose oxidase and Carbohydrate oxidase and Pyranose oxidase on the shape of overnight fermented breads (12 hours, 27°C).

Dough was prepared with standard non-treated wheat flour (100), water (54), fresh yeast (Gelka, Belgium) (0.35), salt (2) and standard improver (1). Dough was mixed in a (Diosna SP24) spiral mixer for 2 minutes at low speed and 7 minutes at high speed. Dough temperature after mixing is 24°C. Dough pieces of 350g are rounded and fermented at 25°C for 20 minutes. After moulding (Bertrand, Electrolux Baking) baguette shaped dough pieces are fermented for 12 hours at 27°C, cut lengthwise with 3 straight cuts of 2 mm depth and 10 cm length who overlap each other 1/3, per bread and baked in a deck oven (210°C, 30 minutes, steaming: 0.2L before baking, very little after baking).

| Dough | Shape of bread | Volume (cc) | Width of cuts (cm) |
|---|---|---|---|
| 1. Reference-Datem + ADA (3g/100kg flour) | | 2100 | 6 |
| 2. GOX 85u/kg flour | slightly more round | 2125 | 4 |
| 3. PO 200u/kg flour | more round | 2100 | 20 |
| | Crust less brown | | |
| 4. CO 200u/kg flour | more round | 2075 | 22 |
| | crust less brown | | |

When dosed at 200 units/kg flour and fermented at 27°C for 12 hours both Carbohydrate and Pyranose oxidase improve the form of the bread and the width of the cuts significantly when compared to addition of Glucose oxidase.

### Example 3: Effect of different dosages of Carbohydrate oxidase on width of cuts of overnight fermented bread.

Dough was prepared with standard non-treated wheat flour (100), water (54), fresh yeast (Gelka, Belgium) (0.35), salt (2) and standard improver (1). Dough was mixed in a (Diosna SP24) spiral mixer for 2 minutes at low speed and 7 minutes at high speed. Dough temperature after mixing is 24°C. Dough pieces of 350g are rounded and fermented at 25°C for 20 minutes. After moulding (Bertrand, Electrolux Baking) baguette shaped dough pieces are fermented overnight, cut lengthwise with 3 straight cuts of 2 mm depth and 10 cm length who overlap each other 1/3, per bread and baked in a deck oven (210°C, 30 minutes, steaming: 0.2L before baking, very little after baking). Tests have been performed with both non-treated Belgian flour and Argentinian flour.

Specifications of Argentinian flour are: Alveograph P = 73 mm H₂O, Alveograph L = 78 mm, Alveograph W = 197 10E-4 J.

### 3.1. Belgian flour, fermentation: 17 hours, 20°C

| Dough | Shape of bread | Volume (cc) | Width of cuts (cm) |
|---|---|---|---|
| 1. Reference with GOX 85u/kg flour | Slightly round | 1800 | 18 |
| 2. CO 50u/kg flour | round | 1750 | 25 |
| 3. CO 100u/kg flour | round | 1900 | 38 |
| 4. CO 200u/kg flour | round | 1900 | 37 |

### 3.2. Argentinian flour, no Datem, ADA, fermentation: 12h, 27°C

| Dough | Shape of bread | Volume (cc) | Width of cuts (cm) |
|---|---|---|---|
| 1. Reference with GOX 85u/kg flour - Datem + ADA (3g/100 kg flour) | | 1850 | 5 |
| 2. CO 100u/kg flour | More round | 2000 | 12 |
| 3. CO 200u/kg flour | More round | 2000 | 18 |

When fermented at 20°C for 17 hours, the optimum dosage of added Carbohydrate oxidase to obtain maximum width of cuts is 100u / kg flour. When fermented at 27°C for 12 hours the optimum dosage of added Carbohydrate oxidase to obtain maximum width of cuts is 200u/kg flour.

### Example 4: Effect of different dosages of Pyranose oxidase on width of cuts of overnight fermented bread

Dough was prepared with standard non-treated wheat flour (100), water (54), fresh yeast (Gelka, Belgium) (0.35), salt (2) and standard improver (1). Dough was mixed in a (Diosna SP24) spiral mixer for 2 minutes at low speed and 7 minutes at high speed. Dough temperature after mixing is 24°C. Dough pieces of 350g are rounded and fermented at 25°C for 20 minutes. After moulding (Bertrand, Electrolux Baking) baguette shaped dough pieces are fermented overnight, cut lengthwise with 3 straight cuts of 2 mm depth and 10 cm length who overlap each other 1/3, per bread and baked in a deck oven (210°C, 30 minutes, steaming: 0.2L before, very little after).

Tests have been performed with both non-treated Belgian flour and Argentinian flour. Specifications of Argentinian flour as in example 3.

### 4.1. Belgian flour, fermentation: 17 hours, 20°C

| Dough | Shape of bread | Volume (cc) | Width of cuts (cm) |
|---|---|---|---|
| 1. Reference with GOX 85u/kg flour | Slightly round | 1725 | 17 |
| 2. PO 50u/kg flour | round | 1675 | 12 |
| 3. PO 100u/kg flour | round | 1775 | 29 |
| 4. PO 200u/kg flour | round | 1775 | 25 |

### 4.2. Argentinian flour, no emulsifier, ADA, fermentation: 12h, 27°C

| Dough | Shape of bread | Volume (cc) | Width of cuts (cm) |
|---|---|---|---|
| 1. Reference with GOX 85u/kg flour - Datem + ADA (3g/100 kg flour) | Slightly round | 2050 | 7 |
| 2. CO 100u/kg flour | round | 2250 | 20 |
| 3. CO 200u/kg flour | More round than 2 | 2250 | 26 |

The same conclusions as made in example 3 on addition of Carbohydrate oxidase can be made on addition of Pyranose oxidase. When fermented at 20°C for 17 hours the optimum dosage of added Carbohydrate oxidase is 100u/kg flour while for fermentation at 27°C for 12 hours maximum width of cut is measured on addition of 200u/kg flour.

### Example 5: Comparison of the effect of double dosage of Glucose oxidase and optimum dosage of Pyranose oxidase on width of cuts of overnight fermented breads.

Dough was prepared with standard non-treated wheat flour (100), water (54), fresh yeast (Gelka, Belgium) (0.35), salt (2) and standard improver. Dough was mixed in a (Diosna SP24) spiral mixer for 2minutes at low speed and 7 minutes at high speed). Dough temperature after mixing is 24°C. Dough pieces of 350g are rounded and fermented at 25°C for 20 minutes. After shaping baguette shaped dough pieces are fermented for 17 hours at 20°C, cut lengthwise with 3 straight cuts of 2 mm depth and 10 cm length who overlap each other 1/3, per bread and baked in a deck oven (210°C, 30 minutes, steaming: 0.2L before and very little after).

| Dough | Shape of bread | Volume (cc) | Width of cuts (cm) |
|---|---|---|---|
| 1. GOX 85u/kg flour | | 1925 | 25 |
| 2. GOX 170u/kg flour | | 1750 | 15 |
| 3. PO 100u/kg flour | more round | 1900 | 37 |

When doubling the usual dosage of added Glucose oxidase width of cuts is not increased. The shape and width of cuts of the breads prepared with Pyranose oxidase are significantly better than those of the reference bread with Glucose oxidase.

### Example 6: Effect of Carbohydrate oxidase, Pyranose oxidase and Glucose oxidase on the shape and the width of cuts of Argentinian breads (direct proofing and baking).

Dough was prepared with standard non-treated wheat flour (100), water (54), fresh yeast (Gelka, Belgium) (0.35), salt (2) and standard improver. Dough was mixed in a (Diosna SP24) spiral mixer for 2minutes at low speed and 7 minutes at high speed). Dough temperature after mixing is 24°C. Dough pieces of 350g are rounded and fermented at 25°C for 20 minutes. After shaping baguette shaped dough pieces are fermented for 150 minutes at 40°C, cut lengthwise with 3 straight cuts of 2 mm depth and 10 cm length who overlap each other 1/3, per bread and baked (210°C, 30 minutes, steaming: 0.2L before, very little after).

| Dough | Shape of bread | Volume (cc) | Width of cuts (cm) |
|---|---|---|---|
| 1. Reference | | 1025 | 9 |
| 2. GOX 85u/kg flour | | 1125 | 16 |
| 3. GOX 170u/kg flour | Slightly more wide | 1100 | 22 |
| 4. CO 100u/kg flour | More wide | 1075 | 35 |
| 5. CO 200u/kg flour | More wide | 1050 | 32 |
| 6. PO 100u/kg flour | more wide | 1050 | 36 |
| 7. PO 200u/kg flour | more wide | 1125 | 29 |

Also in direct fermented and baked Argentine type bread addition of Carbohydrate oxidase or Pyranose oxidase improves the width of cuts of the baked product more than addition of Glucose oxidase.

### Example 7: Effect of Carbohydrate oxidase and Pyranose oxidase on width of cuts of Schnittbrötchen.

Flour (Weizenmehl type 550) (100), water (56), fresh bakers yeast (Gelka, Belgium) (1), salt (2), standard improver (3) are mixed with a spiral mixer (Diosna SP24) for 2 minutes at low speed and 8 minutes at high speed. Dough temperature after mixing is 30°C. After 10 minutes bulk fermentation, dough pieces of 1600g are rounded and divided (Rotamat). Dough pieces of 30g are rested for 1 minute at 25°C, moulded (Bertrand, Electrolux Baking), rested for 8 minutes, cut lengthwise (2 cm depth) closed again, turned upside down and fermented for 17 hours at 15°C before baking in a deck oven (16 minutes at 230°C, 0.11 steam before baking and 0.31 steam after baking).

Specifications of the Weizenmehl used are: 11.4 % protein, Falling number = 310 s, ash content = 0.59%

| Dough | Shape of bread | Volume (cc) | Width of cuts (cm) |
|---|---|---|---|
| 1. Reference | | 1725 | 40 |
| 2. GOX 85u/kg flour | | 1650 | 40 |
| 3. PO 100u/kg flour | more round | 1600 | 47 |
| 4. PO 200u/kg flour | more round | 1700 | 52 |
| 5. CO 100u/kg flour | more round | 1625 | 53 |
| 6. CO 200u/kg flour | more round | 1675 | 57 |

Width of cut is significantly improved on addition of Carbohydrate oxidase or Pyranose oxidase to the dough while no effect is noticed on addition of Glucose oxidase.

### Example 8: Effect of Carbohydrate oxidase and Pyranose oxidase on width of cuts of Schnittbrötchen.

Flour (Weizenmehl type 550) (100), water (56), fresh bakers yeast (Gelka, Belgium) (1), salt (2), standard improver (3) are mixed with a spiral mixer (Diosna SP24) for 2 minutes at low speed and 8 minutes at high speed. Dough temperature after mixing is 30°C. After 10 minutes bulk fermentation, dough pieces of 1600g are rounded and divided (Rotamat). Dough pieces of 30g are rested for 1 minute at 25°C, moulded (Bertrand, Electrolux Baking), rested for 8 minutes, cut lengthwise (2 cm depth) closed again, turned upside down and fermented for 50 minutes at 32°C before baking in a deck oven (16 minutes at 230°C, 0.11 steam before baking and 0.31 steam after baking).

| Dough | Volume (cc) | Width of cuts (cm) |
|---|---|---|
| 1. Reference | 2025 | 27 |
| 2. GOX 85u/kg flour | 2075 | 31 |
| 3. GOX 170u/kg flour | 2075 | 34 |
| 4. CO 50u/kg flour | 2050 | 31 |
| 5. CO 100u/kg flour | 2025 | 34 |
| 6. CO 200u/kg flour | 2025 | 32 |
| 7. PO 50u/kg flour | 2000 | 35 |
| 8. PO 100u/kg flour | 2050 | 36 |
| 9. PO 200u/kg flour | 2025 | 39 |

When compared to the reference the width of cuts of Schnittbrötchen prepared with addition of Carbohydrate oxidase or Pyranose oxidase is improved. The effect of Pyranose oxidase is somewhat more pronounced.

## Claims

1. Method for the improvement of shape and width of cuts of bread during the baking process of bakery products which comprises the step of adding a sufficiently effective amount of Carbohydrate oxidase and/or Pyranose oxidase in said bakery products.

2. Method according to claim 1, further comprising the step of adding other conventionally used baking additives or combinations of baking additives selected from the group consisting of gluten, oxidantia like vitamin C and Azodicarbonamide, emulsifiers like mono-or diglycerides, diacetyl tartaric acid of monoglycerides, sodium stearoyl lactylates, sugar esters of fatty acids, lecithin, sugar, salt, fat and/or oil.

3. Method according to any of the claims 1 or 2 **characterised in that** the Carbohydrate oxidase and/or Pyranose oxidase is added to the ingredients as a dry powder, a granulated or agglomerated powder or a liquid improver.

4. Method according to any of the claims 1 to 3, **characterised in that** the sufficiently effective amount of the carbohydrate oxidase and/or pyranose oxidase lies between 5 and 500 u/kg flour.

5. Method according to any of the claims 1 to 4, **characterised in that** the width of cuts of the baked product is significantly larger than compared with a reference bread not comprising a sufficiently effective amount of Carbohydrate oxidase and/or Pyranose oxidase.

6. Method according to any of the claims 1 to 5, **characterised in that** the width of cuts of the baked product is between about 10% and about 400% larger than compared with a reference bread not comprising a sufficiently effective amount of Carbohydrate oxidase and/or Pyranose oxidase.

7. Use of Carbohydrate oxidase and/or Pyranose oxidase in the improvement of the shape and the width of cuts of bread during the baking process of bakery products.
